# EUROPEAN PATENT SPECIFICATION

(11) **EP 2 004 547 B1**
(45) Date of publication and mention of the grant of the patent: **28.06.2017**
(21) Application number: 07723497.9
(22) Date of filing: 21.03.2007
(51) Int. Cl.: C01B 17/05, B01D 53/52

(54) **PROCESS FOR THE PRODUCTION OF STABLE AQUEOUS SUSPENSIONS OF SULPHUR STARTING FROM HYDROGEN SULPHIDE AND POSSIBLE DISPOSAL OF THE SUSPENSIONS THUS OBTAINED**
VERFAHREN ZUR HERSTELLUNG STABILER WÄSSRIGER SCHWEFELSUSPENSIONEN AUS SCHWEFELWASSERSTOFF UND MÖGLICHE ENTSORGUNG SO GEWONNENER SUSPENSIONEN
PROCÉDÉ DE PRODUCTION DE SUSPENSIONS AQUEUSES STABLES DE SOUFRE À PARTIR DE SULFURE D'HYDROGÈNE ET ÉVACUATION ÉVENTUELLE DES SUSPENSIONS AINSI OBTENUES

(30) Priority: 07.04.2006 IT MI20060689
(43) Date of publication of application: 24.12.2008
(73) Proprietor: Eni S.p.a., 00144 Rome (IT)
(72) Inventor: DE ANGELIS, ALberto, I-20025 Legnano (Milan) (IT); POLLESEL, Paolo, I-20097 San Donato Milanese (IT); SCATTOLIN, Roberto, I-30030 Martellago (Venezia) (IT)
(74) Representative: Bottero, Carlo
(86) International application number: PCT/EP2007/002542
(87) International publication number: WO 2007/115661

(56) References cited:
- WO-A-2005/095271
- GB-A- 1 140 022
- GB-A- 1 145 043
- US-A- 6 096 280
- SANDER U.H.F., FISCHER H., ROTHE U. AND KOLA R.: "Sulphur, Sulphur Dioxide and Sulphuric Acid" 1984, BRITISH SULPHUR CORP. , LONDON, GB , XP002445852 page 56

## Description

The present invention relates to a process for the production of stable aqueous suspensions of sulphur, starting from hydrogen sulphide.

More specifically, the present invention relates to a process for the production of stable aqueous suspensions of sulphur, starting from hydrogen sulphide contained in fossil fuels, such as natural gas or associated gas, and from natural brackish or sea water, and their disposal by means of injection into geological structures. The term "natural brackish water" as used in the present description and claims, means water of a natural origin wherein the concentration of inorganic salts dissolved therein is higher than the drinkableness limit and can reach saturation limits, for example up to 3.5-4% by weight.

Sulphur, in the form of H₂S, can be present even in a significant amount in both crude oil extracted and also in associated gas, in addition to natural gas. As hydrogen sulphide is a polluting substance which must be disposed of before the combustion of methane itself, its presence represents a problem to an extent that the higher the amount of hydrogen sulphide present, the more relevant this problem becomes from an economical point of view.

If its presence, in fact, is in the order of a few parts per million, the additional cost for its treatment is negligible, when the content reaches higher levels, however, for example when the amount of hydrogen sulphide is in excess of 15-20% of the gaseous blend, this cost increases up to prohibitive limits.

Natural gas containing considerable quantities of hydrogen sulphide (acid gas) is treated with solutions capable of selectively absorbing H₂S, such as, for example, solutions of alkanolamines, thus obtaining a gaseous blend of hydrocarbons which can be used as fuel with no problems from an environmental point of view.

H₂S is obtained, in its pure state, by the desorption of solutions of alkanolamines, and it can be subsequently transformed into sulphur through the Claus process. The application of this process, however, proves to be economically convenient only when high volumes of hydrogen sulphide are to be treated and the concentration of hydrogen sulphide in natural or associated gas is at least equal to 5% by volume.

The Claus process also has considerable construction and management costs, for producing a material whose supply widely exceeds the demand. At present, in fact, the supply of the product on the sulphur market exceeds the demand and the market projections for the next five-year period reveal a further increase in the difference between demand and supply. The ever-increasing supply of sulphur is due to a large extent to the exploitation of new oil and natural gas reservoirs, characterized by a high content of compounds containing sulphur.

There is therefore the problem of transforming hydrogen sulphide into elemental sulphur, also when the Claus process is not economically interesting, and also of finding a system for the disposal of sulphur when the market has a low demand for sulphur.

The sulphur currently produced, which does not find an immediate market, is stocked in the form of high dimensioned blocks in huge open-air deposits. This causes considerable problems from an environmental point of view as sulphur is subjected to erosion on the part of atmospheric agents and can therefore be diffused over a large area surrounding the storehouse. Furthermore, due to the presence of micro-organisms present on the surface of the sulphur, the sulphur is transformed into sulphuric acid thus acidifying the surrounding soil.

The ideal solution would be to keep the sulphur protected from atmospheric agents, as can happen in the case of underground disposal in suitable geological structures. In this case, however, the problem arises of how the sulphur can be injected into the formation, as it has a high melting point (119°C). Patent application GB 1 140 022 describes the preparation of suspensions of sulphur by reaction of H S and 2 SO in aqueous medium having a specific electrolyte content, 2 in particular in sea water. The obtained sulphur particles are supposed to sediment quickly in order to improve the filtering properties of the suspension.

In international patent application WO 2005/095271 a process is described for the disposal of sulphur coming from H₂S contained in natural or associated gas, which consists in reacting hydrogen sulphide with an aqueous solution of sulphur dioxide, obtaining a sulphur dispersion in water having an exceptional stability. This dispersion of sulphur in water is stable for weeks and extremely high weight concentrations of sulphur can be reached (up to 30% or even more), whereas a common sulphur dispersion in water proves to be unstable when the sulphur concentration exceeds 1 g/l.

This process envisages the use of pure water to trigger the synthesis reaction of the sulphur dispersion in water. This characteristic can be a limitation when the production of the sulphur dispersion in water is programmed near the gas production wells, which are often in secluded areas, where sufficient amounts of fresh water are not always available. Furthermore, fresh water always represents a cost, which in some areas can be quite significant. Finally, increasing attention is being paid, from an environmental point of view, towards the consumption of fresh water.

The Applicants have now found a process for the production of stable sulphur suspensions, present as H₂S in natural or associated gas, by means of an alternative process to both the Claus process and also to that of the known art, which still envisages the synthesis of sulphur in the form of an aqueous suspension, which can be used for obtaining sulphur with a high degree of purity or for the disposal of the same in dedicated sites, in which, however, natural brackish or sea water is used as the liquid medium for the suspension. This is a very surprising result, as it is known - see, for example "Gmelin Handbuch der Anorganischen Chemie", Schwefel, Teil, Lieferung, 1, 254-502, - that the presence of inorganic ions cause the coagulation of colloids in aqueous solutions, and this effect is particularly marked in common sulphur dispersions in water, which are also very sensitive to concentrations of ions, such as sodium or potassium, even in the order of a few mg/l (34 and 32, respectively) and even more so to the presence of earth alkaline metals (4 mg/l Be²⁺, 8.4 mg/l Mg²⁺, 7.6 mg/l Ca⁺²).

The object of the present invention therefore relates to a process for the production of stable sulphur suspensions starting from hydrogen sulphide contained in natural or associated gas, comprising:
a. oxidizing an aliquot of the hydrogen sulphide to sulphur dioxide;
b. dissolving the sulphur dioxide thus produced in brackish water or sea water;
c. effecting the reaction (I) :

   2H₂S + SO₂ → → 3S + 2H₂O (I)

   by reacting the remaining hydrogen sulphide with the solution prepared in step (b), thus obtaining a suspension of sulphur in salt water; and
d. maintaining the suspension thus obtained at room temperature.

According to the present invention, hydrogen sulphide can be recovered from natural or associated gas or extracted from crude oil, according to conventional methods, for example by means of absorption with amines. These technologies allow streams of H₂S to be obtained at a degree of purity higher than 90%. An aliquot of the H₂S stream thus obtained, ranging from 5 to 35% by volume with respect to the total, is oxidised to SO₂ which is dissolved in natural brackish water or sea water and reacted with the remaining H₂S also at a temperature equal to or lower than room temperature (T = 20°C), thanks to the high solubility of the gaseous SO₂ also in brackish water.

As an alternative to the previous process scheme, when the concentration of hydrogen sulphide is relatively high, higher than 1%, only a third of the gaseous stream of natural or associated gas can be treated with amine absorbing solutions.

According to this alternative process scheme, a third of the gaseous stream is treated with alkanolamines, obtaining a stream of concentrated hydrogen sulphide, which is burned to sulphur dioxide, which is absorbed in natural brackish water or sea water. The remaining gaseous stream, consisting of 2/3 of the initial stream, is put in contact with this aqueous solution of SO₂. In this way the hydrogen sulphide reacts with the sulphur dioxide generating the aqueous suspension of sulphur, whereas the natural or associated gas leaves the reactor purified.

According to a further alternative to the initial process scheme, the treatment with solutions of alkanolamines can be avoided when the concentration of hydrogen sulphide is relatively high, higher than 2%.

According to this alternative process scheme, a third of the gaseous flow is treated with an amount of water in defect with respect to the total combustion, by oxidising hydrogen sulphide to SO₂, but substantially not burning the methane. The gaseous stream thus obtained, containing mainly methane, SO₂ and small amounts of CO₂, is put in contact with natural brackish water or sea water which easily absorb SO₂ creating a stream of gas essentially consisting of methane (with traces of CO₂) and an aqueous solution of SO₂. The remaining gas stream, consisting of 2/3 of the initial stream, is then put in contact with said aqueous solution of SO₂. In this way, H₂S reacts with SO₂ producing the aqueous suspension of sulphur, whereas the natural or associated gas leaves the reactor purified.

The process object of the present invention, and its possible alternatives, is characterized by various very significant advantages:
1. it uses brackish water or sea water instead of fresh water and consequently the process costs are considerably reduced;
2. said water used for obtaining the suspension has an almost null environmental impact;
3. by using brackish water or sea water, the process can be used even in remote areas, where fresh water sources are not available;
4. with the same the operating conditions, suspensions are obtained having a sulphur particle-size with higher dimensions with respect to those obtained with fresh water (200-400 µm with respect to 20-40 µm) therefore more suitable for being pumped into fractures or other geological formations;
5. due to the presence of alkaline and alkaline earth metals, in particular in sea water, there is a buffer effect with an increase in the pH of the sulphur dispersion towards values closer to neutrality and therefore less aggressive with respect to the geological structure in which the sulphur dispersion in water is to be injected;
6. the presence of a Claus plant for the transformation of H₂S into sulphur, is not necessary, a simple burner is sufficient for oxidising, via combustion, a part (up to 1/3) of H₂S to SO₂. The process is therefore economical, and can also be used in remote areas. Thanks to the alternative process schemes previously described, moreover, it is possible to partly or totally reduce the treatment of gas with absorbing amines, further decreasing the process cost;
7. the sulphur disposed of in deposits, by means of the aqueous suspension produced according to the process of the present invention, can optionally be recovered from the geological structure, should the market requirement change and the commercialisation of sulphur become interesting;
8. the reaction between SO₂ and H₂S takes place at room temperature or, in general, at the temperature of the brackish or sea water.

If the stability of the aqueous suspension is to be increased, additives can be added, in a small quantity and absolutely non-toxic, consequently with null environmental impact, capable of guaranteeing the stability of the above-mentioned suspension for a very long periods of time.

A typical example of the above additives are emulsions stabilized by 0.1% by weight of Agar-agar, a natural product normally used in the food industry, which stabilises sulphur suspensions in water for extremely long periods of time.

Some examples are provided hereunder, for illustrative and non-limiting purposes, of the synthesis of the aqueous sulphur suspension according to the present invention and of the evaluation of the particle-size by means of a laser diffraction granulometer.

The graphs of Figure 1-2 are associated with the examples; the Figures represent, respectively:
Figure 1 the particle-size distribution (differential and cumulative) of the sulphur sample having a concentration in brackish water of 6.8% by weight;
Figure 2 the particle-size distribution (differential and cumulative) of the sulphur sample having a concentration in sea water of 6.8% by weight.

### Example 1

46.08 g of SO₂ (0.72 moles) are dissolved in 1 liter of brackish water comprising 35 g of NaCl. Pure H₂S is bubbled into said limpid and colourless solution, at a flow-rate of 2 Nl/h, collecting samples which are titrated in order to evaluate the residual concentration of SO₂ and H₂S. The SO₂ is iodometrically titrated, whereas the H₂S is titrated by complexometry, using hydroxymercurobenzoic acid as titration agent and ditizone as indicator. The H₂S at the inlet is completely absorbed. Table 1 shows the trend of this titration.

A stable suspension of sulphur in water having a yellow colour is formed, from which both the SO₂ and H₂S disappeared, according to the reaction:

SO₂ + 2H₂S → → 3S + 2 H₂O

The pH of said aqueous suspension is equal to 2.64 and the weight content of sulphur 68.5 g/l (6.85%).

The suspension was maintained under rest conditions at room temperature for two weeks, at the end of which no formation of deposits was observed.

**Table 1: Titration of the sulphur suspension**

| Sample | H₂S passed into the solution (moles) | H₂S concentration (moles/liter) | SO₂ concentration (moles/liter) |
|---|---|---|---|
| 1 | 0 | 0 | 0.720 |
| 2 | 0.357 | 0.0164 | 0.419 |
| 3 | 0.714 | 0.0193 | 0.174 |
| 4 | 1.071 | 0.0148 | 0.079 |
| 5 | 1.428 | 0.0014 | 0.00 |

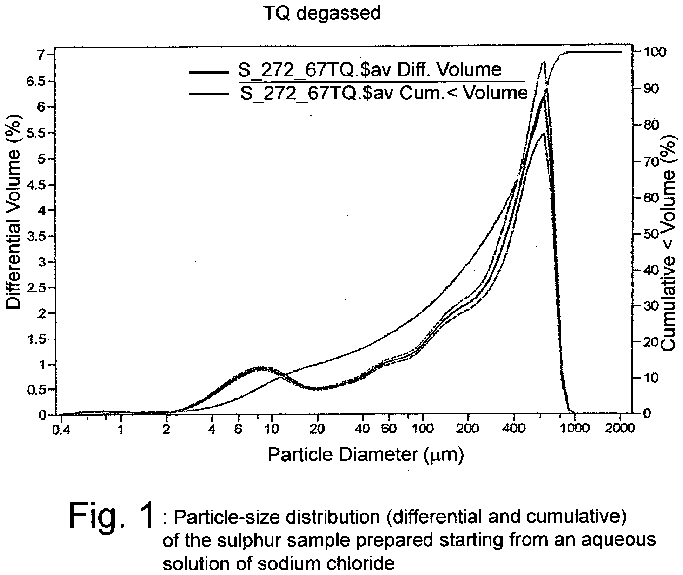

The particle-size distribution (PSD) of the sulphur particles of this suspension is evaluated by means of a laser diffraction granulometer (Coulter type LS730). The instrument, which uses a laser in the solid state with a wave-length of 750 nm, allows a measurement-range of between 0.04 and 2,000 µm to be obtained. The processing of the scattering signal was effected by applying the optical model of Mie (Figure 1).

### Example 2

46.08 g of SO₂ (0.72 moles) are dissolved in 1 liter of sea water comprising 34.31 g of NaCl, 13.466 g of MgCl₂.H₂O and 3.06 g of CaCl₂.H₂O. Pure H₂S is bubbled into said limpid and colourless solution, at a flow-rate of 2 Nl/h, collecting samples which are titrated in order to evaluate the residual concentration of SO₂ and H₂S. The SO₂ is iodometrically titrated, whereas the H₂S is titrated by complexometry, using hydroxymercurobenzoic acid as titration agent and ditizone as indicator. The H₂S at the inlet is completely absorbed.

Table 2 shows the trend of this titration. A stable suspension of sulphur in water having a yellow colour is formed, from which both the SO₂ and H₂S disappeared, according to the reaction:

SO₂ + 2H₂S → → 3S + 2H₂O

The pH of said aqueous suspension is equal to 4.3 and the weight content of sulphur 68.5 g/l (6.85%).

The suspension was maintained under rest conditions at room temperature for two weeks, at the end of which no formation of deposits was observed.

**Table 2: Titration of the sulphur suspension**

| Sample | H₂S passed into the solution (moles) | H₂S concentration (moles/liter) | SO₂ concentration (moles/liter) |
|---|---|---|---|
| 1 | 0 | 0 | 0.720 |
| 2 | 0.357 | 0.0139 | 0.439 |
| 3 | 0.714 | 0.0213 | 0.241 |
| 4 | 1.071 | 0.0197 | 0.044 |
| 5 | 1.428 | 0.0073 | 0.00 |

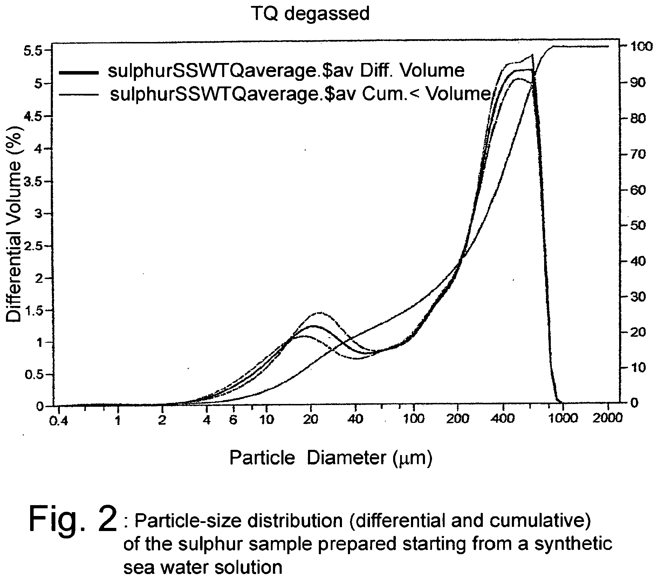

The particle-size distribution (PSD) of the sulphur particles of this suspension is evaluated by means of a laser diffraction granulometer (Coulter type LS730). The instrument, which uses a laser in the solid state with a wave-length of 750 nm, allows measurement-range of between 0.04 and 2,000 µm to be obtained. The processing of the scattering signal was effected by applying the optical model of Mie (Figure 2).

## Claims

1. A process for the production of stable sulphur suspensions at room temperature, starting from hydrogen sulphide comprising:
a. oxidising an aliquot of hydrogen sulphide to sulphur dioxide;
b. dissolving the sulphur dioxide thus produced in brackish water or sea water;
c. effecting the reaction (I):
2H₂S + SO₂ → → 3S + 2H₂O (I)
by putting the remaining hydrogen sulphide in contact with the solution prepared in step (b); and
d. removing the suspension thus obtained at room temperature, according to the most suitable procedure.

2. The process according to claim 1, which comprises filtering the sulphur suspension thus obtained, for the production of sulphur or, as an alternative, disposing of the suspension by means of injections into dedicated geological structures.

3. The process according to claim 1 or 2, wherein H₂S is recovered from natural or associated gas or from a crude oil product by means of absorption with amines.

4. The process according to claim 1, 2 or 3, wherein the H₂S has a concentration higher than 90%.

5. The process according to claim 1, 2, 3 or 4, wherein an aliquot of the stream containing H₂S, ranging from 5 to 35% by volume with respect to the total, is absorbed in an alkanolamine solution, subsequently oxidised to SO₂ and dissolved in brackish water or sea water.

6. The process according to claim 1, wherein H₂S is oxidised to SO₂ by directly burning about one third of the methane mixture with H₂S as it leaves the extraction well, without pre-treatment with alkanolamine, in the presence of a substoichiometric quantity of air.

7. The process according to claim 6, wherein the reaction mixture containing SO₂ is bubbled through a brackish or sea water head.

8. The process according to claim 6 or 7, wherein the remaining natural gas containing H₂S is subsequently bubbled into the solution of SO₂ in brackish water or sea water, obtaining a stable suspension of sulphur in water.

9. The process according to any of the previous claims, wherein the sulphur suspension in water is disposed of in a geological structure by means of injection in a porous matrix also at room temperature or, in any case, lower than the melting point of sulphur.

10. The process according to any of the previous claims from 1 to 8, wherein the sulphur suspension in water is disposed of in a geological structure by means of injection into the fracture also at room temperature or, in any case, lower than the melting point of sulphur.

11. The process according to any of the previous claims from 1 to 8, wherein the sulphur suspension in water is disposed of in a geological structure by means of injection under conditions of hydraulic fracturing, also at room temperature or, in any case, lower than the melting point of sulphur.

## Patentansprüche

1. Verfahren zur Herstellung stabiler Schwefelsuspensionen bei Raumtemperatur ausgehend von Wasserstoffsulfid, umfassend:
a. Oxidieren eines Aliquots von Wasserstoffsulfid zu Schwefeldioxid;
b. Auflösen des so in Brackwasser oder Meerwasser erhaltenen Schwefeldioxids;
c. Bewirken der Reaktion (I):
**2H₂S + SO₂ → → 3S + 2H₂O** **(I)**
durch in Kontakt bringen des verbleibenden Wasserstoffsulfids mit der in Schritt (b) hergestellten Lösung;
d. Entfernung der so bei Raumtemperatur erhaltenen Suspension gemäß einem meistgeeigneten Verfahren.

2. Verfahren nach Anspruch 1, umfassend die Filtrierung der so erhaltenen Schwefelsuspension für die Herstellung von Schwefel oder als eine Alternative Endlagern der Suspension mittels Injektionen in bestimmten geologischen Strukturen.

3. Verfahren nach Anspruch 1 oder 2, worin das H₂S aus natürlichem oder verbundenem Gas oder aus einem Rohölprodukt mittels Absorption mit Aminen gewonnen wird.

4. Verfahren nach Anspruch 1, 2 oder 3, worin das H₂S eine Konzentration größer als 90% hat.

5. Verfahren nach Anspruch 1, 2, 3 oder 4, worin ein Aliquot des H₂S enthaltenen Stroms, in einem Bereich von 5 bis 35 Volumen-% hinsichtlich der Gesamtheit, in einer Alkanolaminlösung absorbiert wird, im Anschluss zu SO₂ oxidiert und in Brackwasser oder Meerwasser aufgelöst wird.

6. Verfahren nach Anspruch 1, worin das H₂S zu SO₂ oxidiert wird, durch direkte Verbrennung von etwa einem Drittel der Methanmischung mit H₂S wie diese die Extraktionsquelle verlässt, ohne Vorbehandlung mit Alkanolamin, in Gegenwart einer substöchiometrischen Menge Luft.

7. Verfahren nach Anspruch 6, worin die SO₂ enthaltende Reaktionsmischung in Blasenform durch einen Brackwasser- oder Meerwasserkopf durchgeleitet wird.

8. Verfahren nach Anspruch 6 oder 7, worin das verbleibende H₂S-enthaltende natürliche Gas im Anschluss in eine Lösung von SO₂ in Brackwasser oder Meerwasser in Blasenform durchgeleitet wird, wobei eine stabile Suspension von Schwefel in Wasser erhalten wird.

9. Verfahren nach irgendeinem der vorhergehenden Ansprüche, worin die Schwefelsuspension in Wasser in einer geologischen Struktur mittels Injektion und in eine poröse Matrix auch bei Raumtemperatur oder in jedem Fall geringer als den Schmelzpunkt von Schwefel endlagert wird.

10. Verfahren nach irgendeinem der vorhergehenden Ansprüche 1 bis 8, worin die Schwefelsuspension in Wasser in eine geologische Struktur endlagert wird mittels Injektion in die Fraktur auch bei Raumtemperatur oder in jedem Fall geringer als dem Schmelzpunkt von Schwefel.

11. Verfahren nach irgendeinem der vorhergehenden Ansprüche 1 bis 8, worin die Schwefelsuspension in Wasser in eine geologische Struktur endlagert wird mittels Injektion unter Bedingungen des hydraulischen Brechens auch bei Raumtemperatur oder in jedem Fall geringer als dem Schmelzpunkt von Schwefel.

## Revendications

1. Procédé de production, à température ambiante, de suspensions de soufre stables, à partir de sulfure d'hydrogène, comprenant les étapes suivantes :
a) oxyder une fraction aliquote de sulfure d'hydrogène en dioxyde de soufre,
b) dissoudre le dioxyde de soufre ainsi produit dans de l'eau saumâtre ou de l'eau de mer,
c) réaliser la réaction (I) :
2H₂S + SO₂ → 3 S + 2 H₂O (I)
en mettant le reste de sulfure d'hydrogène en contact avec la solution préparée dans l'étape (b),
d) et isoler la suspension ainsi obtenue à température ambiante, en opérant selon le procédé le plus approprié.

2. Procédé conforme à la revendication 1, qui comporte le fait de filtrer la suspension de soufre ainsi obtenue pour produire du soufre, ou bien, autre possibilité, le fait de se débarrasser de cette suspension en l'injectant dans des structures géologiques dédiées.

3. Procédé conforme à la revendication 1 ou 2, pour lequel on récupère le sulfure d'hydrogène H₂S à partir de gaz naturel ou de gaz associé à celui-ci, ou à partir d'un produit de type pétrole brut, par absorption au moyen d'amines.

4. Procédé conforme à la revendication 1, 2 ou 3, dans lequel la concentration du sulfure d'hydrogène vaut plus de 90 %.

5. Procédé conforme à la revendication 1, 2, 3 ou 4, dans lequel une fraction aliquote du courant contenant du sulfure d'hydrogène, représentant de 5 à 35 % du volume total de ce courant, est soumise à l'opération d'absorption dans une solution d'alcanolamine, et ensuite oxydée en dioxyde de soufre qui est dissous dans de l'eau saumâtre ou dans de l'eau de mer.

6. Procédé conforme à la revendication 1, dans lequel on oxyde le sulfure d'hydrogène H₂S en dioxyde de soufre SO₂ en brûlant à peu près un tiers du mélange de méthane et de sulfure d'hydrogène H₂S directement à la sortie du puits d'extraction, sans traitement préalable avec une alcanolamine, en présence d'une quantité sub-stoechiométrique d'air.

7. Procédé conforme à la revendication 6, dans lequel on fait barboter le mélange réactionnel contenant du dioxyde de soufre SO₂ dans une cuve de tête d'eau saumâtre ou d'eau de mer.

8. Procédé conforme à la revendication 6 ou 7, dans lequel on fait ensuite barboter le reste de gaz naturel contenant du sulfure d'hydrogène H₂S dans la solution de dioxyde de soufre SO₂ dans de l'eau saumâtre ou de l'eau de mer, ce qui donne une suspension stable de soufre dans de l'eau.

9. Procédé conforme à l'une des revendications précédentes, dans lequel on se débarrasse de la suspension de soufre dans de l'eau en l'envoyant dans une structure géologique par injection dans une matrice poreuse, également à température ambiante ou en tout cas inférieure au point de fusion du soufre.

10. Procédé conforme à l'une des revendications précédentes 1 à 8, dans lequel on se débarrasse de la suspension de soufre dans de l'eau en l'envoyant dans une structure géologique par injection dans la fracture, également à température ambiante ou en tout cas inférieure au point de fusion du soufre.

11. Procédé conforme à l'une des revendications précédentes 1 à 8, dans lequel on se débarrasse de la suspension de soufre dans de l'eau en l'envoyant dans une structure géologique par injection dans des conditions de fracturation hydraulique, également à température ambiante ou en tout cas inférieure au point de fusion du soufre.
